# EUROPEAN PATENT SPECIFICATION

(11) **EP 4 010 605 B1**
(45) Date of publication and mention of the grant of the patent: **29.01.2025**
(21) Application number: 20934994.3
(22) Date of filing: 31.12.2020
(51) Int. Cl.: F16D 13/75

(54) **CLUTCH COVER ASSEMBLY COMPENSATING LINING WEAR PRECISELY AND AUTOMATICALLY**
KUPPLUNGSABDECKUNGSANORDNUNG MIT PRÄZISEM UND AUTOMATISCHEM AUSGLEICH DES BELAGVERSCHLEISSES
ENSEMBLE COUVERCLE D'EMBRAYAGE COMPENSANT L'USURE DE LA GARNITURE DE MANIÈRE PRÉCISE ET AUTOMATIQUE

(30) Priority: 15.05.2020 TR 202007682
(43) Date of publication of application: 15.06.2022
(73) Proprietor: Dönmez Debriyaj Sanayi Ve Ticaret Anonim Sirketi, Çigli/Izmir (TR)
(72) Inventor: AYGÜL, Erkan, Çigli/Izmir (TR)
(74) Representative: Yamankaradeniz, Kemal
(86) International application number: PCT/TR2020/051468
(87) International publication number: WO 2021/230837

(56) References cited:
- EP-A1- 3 109 497
- WO-A1-01/88400
- WO-A2-2019/059866
- WO-A2-2019/059866
- CN-Y- 201 050 559
- CN-Y- 201 050 559
- DE-A1- 102014 210 994
- GB-A- 2 372 079

## Description

### Technical Field

The invention relates to a clutch cover assembly compensating clutch disc lining wears even at minimum level precisely and automatically.

The invention is particularly relates to a clutch pressure compensating clutch disc lining wears by keeping the release load and clamp load constant while the vehicle is in motion, without affecting driving comfort.

### State of the Art

Wears occur on clutch disc linings are eliminated by screw, tab, and clamp or thread systems already included in the current clutch systems. In these systems, compensation of wears can be realized as much as it is allowed with the designs of the systems. In other words, the wear value measure to be compensated can be fully compensated in case thread pitches, screw pitch gaps, etc. is greater than the parameters. In the contrary case, if the wear value measure is smaller than the parameter measurements, systems cannot be activated and minimal wears cannot be compensated. In all of the clutch cover assemblies, worm screws, tabs, clamps and threads are used in decimal size range. In this case, the wears occur on the lining cannot be met instantly and precisely.

In addition to this, production of clutch cover assemblies realized by using worm screw, tab, clamp or thread systems is difficult and complex. Thus, they are high cost configurations. Moreover, it is difficult to assembly and produces the parts. Obtaining the standard in each product assembly related to this also creates a problem and leads to high costs.

The wearing causes the clamp load and release load to change and affects engagement. Moreover, experiencing these changes negatively affect the driving comfort.

Application numbered TR2016/02947 relates to clutch cover assembly with wear compensation mechanism. It is aimed to keep the clutch release load, clamp load and clutch cover assembly height at a fixed value or within a certain range with the inventive clutch cover assembly. In said application, wear compensation is realized by detecting the change in the operating position of the diaphragm spring depending on wearing by means of the sensors.

Application numbered TR2018/00225 relates to a double disc clutch cover assembly system. Said invention configuration relates to a double-disc clutch pressure system developed so as to prevent the wears occurring in the clutch systems. The inventive double-disc clutch pressure system provides to perform separation and clutching processes simultaneously in the clutch systems.

As a result, due to the abovementioned disadvantages and the insufficiency of the current solutions regarding the subject matter, a development is required to be made in the relevant technical field Documents WO2019/059866, CN 201050559, DE102014210994 and EP3109497 are also related prior art.

### Brief Description of the Invention

The present invention is related to clutch cover assembly as defined by the appended claims, which fulfills the abovementioned requirements, eliminates all disadvantages and brings some additional advantages.

The main aim of the invention is to provide a clutch cover assembly compensating the wear on the clutch lining equal to the amount of wear and occurrence of wear simultaneously.

An aim of the invention is to provide a clutch cover assembly that enables wear compensation automatically while driving the vehicle.

Another aim of the invention is to provide a clutch cover assembly that does not have a wear limit based on the mechanism and mechanism components.

In order to fulfill the above mentioned aims, the present invention relates to a clutch pressure which is provided on the clutch disc and comprises a cover, a pressure plate provided in said cover, a diaphragm spring connected with the cover and an adjustment ring that is fitted on said pressure plate, increases the thickness of the pressure plate according to the wear value. Accordingly, said clutch mechanism comprises the following; a stop ramp positioned on the pressure plate in a manner such that it remains stable when wearing occurs on the clutch disc lining so as to compensate the wear occurred in the clutch disc lining, a cocking ramp that activates said adjustment ring together with it so as to increase the thickness of the pressure plate, a removable wear adjusting bolt whose movement is restricted with the casing so as to keep said stop ramp in a fixed position during wear and a force sheet that is connected to the pressure plate with a bolt at both ends and engaged to the stop ramp from its central section.

In order to achieve the aims of the invention, it comprises a adjusting ramp extension spring that activates mentioned adjusting ramp clockwise.

In order to achieve the aims of the invention, it comprises an adjustment ring extension spring that mentioned adjustment ring.

In order to achieve the aims of the invention, it comprises a hook that is connected with adjusting ramp extension spring and adjustment ring extension spring and engaged with the adjustment ring at one end.

In order to achieve the aims of the invention, it comprises a casing slot that limits the movement of the adjusting bolt in case of wear by abutting the same, is configured on the casing.

In order to achieve the aims of the invention, it comprises a adjusting ramp bearing channel that is configured on mentioned pressure plate and on which the adjusting ramp is located.

In order to achieve the aims of the invention, it comprises an adjustment ring channel that is configured on mentioned adjustment ring.

In order to achieve the aims of the invention, it comprises a stop ramp angled surface that is defined on mentioned stop ramp.

In order to achieve the aims of the invention, it comprises a adjusting ramp latch that is located in the adjustment ring and engages the adjusting ramp with the adjustment ring.

In order to achieve the aims of the invention, it comprises a adjusting ramp angled surface that is defined on mentioned stop ramp corresponding to mentioned stop ramp.

In order to achieve the aims of the invention, it comprises an adjusting bolt setup surface that is defined on mentioned wear adjusting bolt corresponding to mentioned stop ramp setup surface.

In order to achieve the aims of the invention, it comprises an assembly hole that is between the stop ramp setup surface and mentioned adjusting bolt setup surface in case clutch cover assembly is passive so as to compensate for wear during shipping or maintenance processes

The structural and characteristic features of the present invention will be understood clearly by the following drawings and the detailed description made with reference to these drawings and therefore the evaluation shall be made by taking these figures and the detailed description into consideration.

### Figures Clarifying the Invention

**Figure 1** is a section view of the clutch mechanism.
**Figure 2** is a general and section view of the clutch cover assembly.
**Figure 3** is a detailed view of the clutch cover assembly.
**Figure 4** is a detailed view of the clutch cover assembly.
**Figure 5** is the general view of the cover for the clutch cover assembly.
**Figure 6** is the general view of the diaphragm spring for clutch cover assembly.

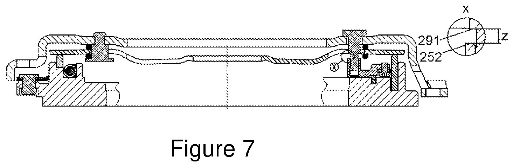

**Figure 7** is a section view of the assembly of the clutch cover assembly for delivery.

The figures are not required to be scaled and the details which are not necessary for understanding the present invention may be neglected. Moreover, the elements that are at least substantially identical or have at least substantially identical functions are shown by the same number.

### Description of the References

10 Clutch Mechanism
   11 Clutch Disc
      111 Clutch Disc Lining
20 Clutch Cover Assembly
   21 Cover
      211 Cover Slot
   22 Diaphragm Spring
      221 Diaphragm Spring Slot
   23 Pressure Plate
      231 Pressure Plate Ramp Angle
      232 Adjusting Ramp Bearing Channel
   24 Adjustment Ring
      241 Adjustment Ring Channel
      242 Adjustment Ring Ramp Angle
      243 Adjustment Ring Extension Spring
      244 Hook Hole
   25 Stop Ramp
      251 Stop Ramp Angled Surface
      252 Stop Ramp Setup Surface
   26 Adjusting Ramp
      261 Stop Ramp Angled Surface
      262 Adjusting Ramp Latch
      263 Adjusting Ramp Extension Spring
   27 Hook
   28 Force Sheet
   29 Wear Adjusting Bolt
      291 Adjusting Bolt Setup Surface
30 Flywheel
x: Engine direction
Z: Assembly space
A: Section direction

### Detailed Description of the Invention

In this detailed description, the inventive clutch cover assembly (10) is described only for clarifying the subject matter in a manner such that no limiting effect is created.

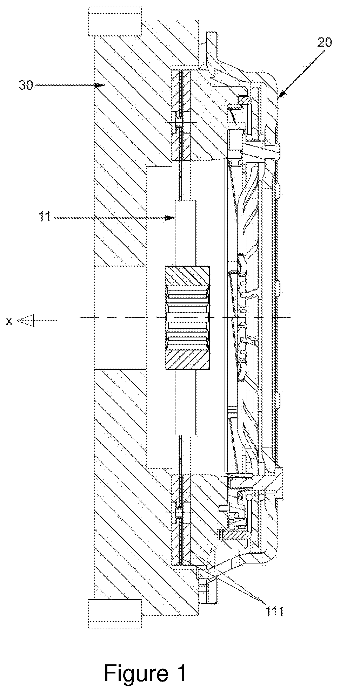

The inventive clutch cover assembly (20) is positioned in the clutch mechanism (10) shown in Figure 1 The clutch mechanism (10) is the transmission part that provides the opportunity of gear shifting by cutting the connection between the engine of the vehicle and the gearbox and its two main elements are the clutch disc (11) and the clutch cover assembly (20). The flywheel (30) is the element that transmits movement from the vehicle engine to the clutch and tries to keep this movement constant. When the flywheel (30) rotates, the clutch disc (11) is stationary, however as soon as the surfaces contact with each other; a kind of locking is realized. Therefore, the rotational movement of the flywheel (30) is transmitted to the gearbox and subsequently to the wheels by means of the clutch disc (11). Wearing occurs on the clutch disc linings (111) in time and the inventive clutch cover assembly (20) is used in the detection and compensation of this wear instantly.

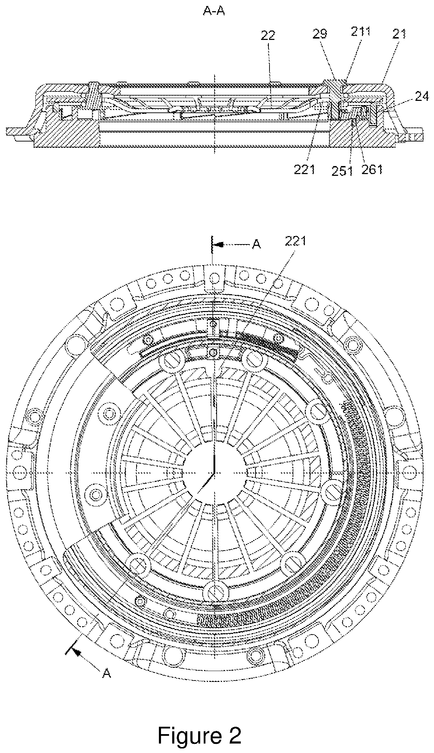

The main elements of the clutch cover assembly (20) whose general and section view taken in the A-A direction are given in Figure 2 are as follows; a cover (21), a diaphragm spring (22), a pressure plate (23) and an adjustment ring (24). In addition to these elements, there are the following in the clutch cover assembly (20) so as to function particularly for wear compensation; a stop ramp (25), a adjusting ramp (26), a hook (27), a force sheet (28) and a wear adjusting bolt (29).

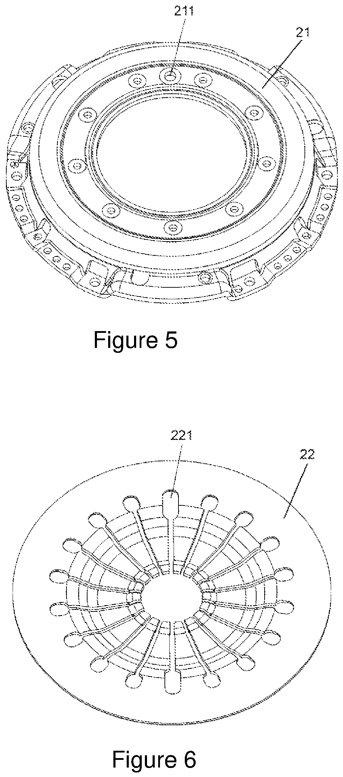

Said cover (21), whose general view is given in Figure 5 is a structure that covers and protects the structural elements of the clutch cover assembly (20). There is a cover slot (211) on the cover (21). Said wear adjusting bolt (29) is provided within said cover slot (211). In case wear occurs on the clutch disc lining (111), the wear adjusting bolt (29) abuts the cover slot (211).

The main task of said diaphragm spring (22) that can be seen in Figure 6 in general, in the clutch mechanism (10) is to provide engagement by forming pressure on said pressure plate (23) when the driver releases the clutch pedal and separation by releasing the force on the pressure plate (23) when the driver presses onto the pedal. The diaphragm spring (22) is connected with the cover (21) and there are multiple hole structures thereon. Two of these holes, which are configured mutually in the same direction, are diaphragm spring slots (221) that are wider. One of said diaphragm spring slots (221) is preferably positioned in alignment with said cover slot (211) and the wear adjusting bolt (29) is provided therein.

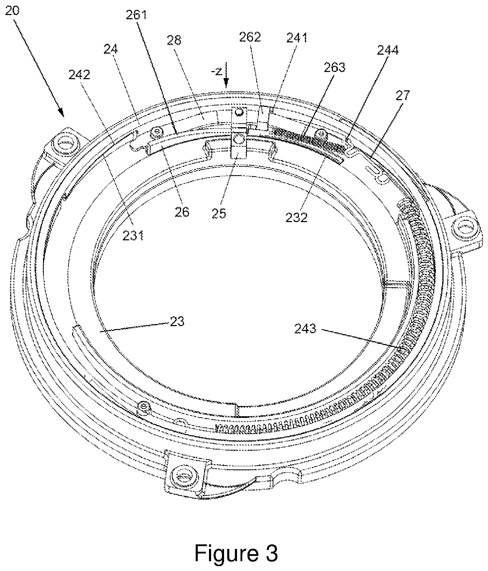

The main task of the pressure plate (23) that can be seen in Figure 3 in detail in the clutch mechanism (10) is to provide releasing when the clutch pedal is engaged and provide engagement when the clutch pedal is released so as to provide gear shifting. There are channels, bearings, ramp angles and connection holes on the pressure plate (23). A pressure plate ramp angle (231) is provided on the pressure plate, and a adjusting ramp bearing channel (232) is configured to house said adjusting ramp (26). Said force sheet (28) is also engaged on the pressure plate (23).

The main task of the adjustment ring (24) that can be seen in Figure 3 in detail in the clutch mechanism (10) is to rotate clockwise when wear occurs on the clutch disc linings (111) and to increase the thickness of the pressure plate (23) by means of the adjusting ramp (26). The adjustment ring (24) is placed on the pressure plate (23). An adjustment ring ramp angle (242), an adjustment ring channel (241) and a hook hole (244) are configured on the adjustment ring (24). Said hook (27) is engaged with said hook hole (244). An adjustment ring extension spring (243) is connected to the free end of the hook (27). The other end of said adjustment ring extension spring (243) is connected to the pressure plate (23) by means of a bolt. When the adjustment ring extension spring (243) is connected to pressure plate (23) fixedly, it is connected to the hook (27) by means of puling/attaching. The main task of the adjustment ring extension spring (243) in the clutch mechanism (10) is to pull the adjustment ring (24) over the hook (27) to which it is associated in case wearing occurs on the clutch disc lining (111).

The main task of said stop ramp (25) in the clutch mechanism (10) is to provide the operation of other mechanism elements by being stable when wear occurs on the clutch disc lining (111). A stop ramp angled surface (251) and stop ramp setup surface (252) are configured on the stop ramp (25) positioned on the pressure plate (23). Also, the force sheet (28) and the wear adjusting bolt (29) are associated with the stop ramp (25).

The adjusting ramp (26) is located within the adjusting ramp bearing channel (232) on the pressure plate (23). The adjusting ramp (26) is configured with the adjusting ramp angled surface (261) and also has a adjusting ramp latch (262). Said adjusting ramp latch (262) is located in said adjustment ring channel (241) and provides the engagement of the adjusting ramp (26) with the adjustment ring (24). A adjusting ramp extension spring (263) is connected to a hole configured on the adjusting ramp (26) from one end. Said adjusting ramp extension spring (263) is connected to the hook (27) by pulling/attaching the same from the other end. The main task of the adjusting ramp extension spring (263) is to pull the adjusting ramp (26). The main task of the adjusting ramp (26) in the clutch mechanism (10) is to provide clockwise movement by means of the adjusting ramp extension spring (263) when wear occurs on the clutch disc lining (111).

The force sheet (28) seen in Figure 3 is connected to the pressure plate (23) with a bolt at both ends and is engaged to the stop ramp (25) from its central section. The main task of the force sheet (28) in the clutch mechanism (10) is to allow the stop ramp (25) continuously applying a proper force to the pressure plate (23).

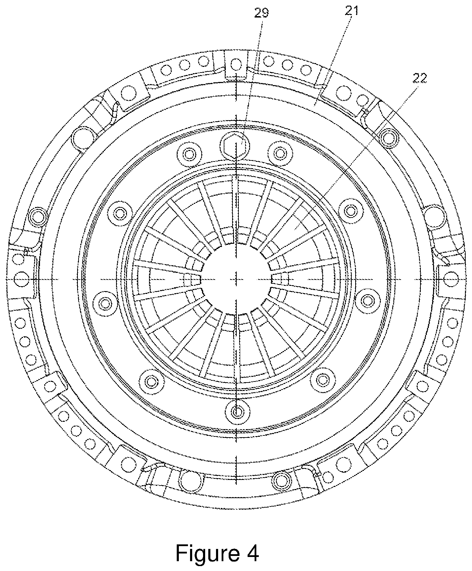

The main task of the adjusting bolt (29) seen in Figure 4 in the clutch mechanism (10) is to provide keeping the stop ramp (25) in a stable position by resting on the upper surface of the cover slot (211) when wear occurs on the clutch disc lining (111). An adjusting bolt setup surface (291) is configured on the wear adjusting bolt (29) that corresponds to said stop ramp setup surface (252).

In case the vehicle operates normally, when there is no wear on the clutch disc lining (111), the clutch cover assembly (20) continues to operate under normal conditions. Under the normal operation conditions, the force sheet (28) continuously pushes the stop ramp (25) in the -z direction and applies constant pressure on the adjusting ramp (26).

When wearing starts on the clutch disc lining (111), first of all pressure is applied onto the adjusting ring (24) by the diaphragm spring (22). Afterwards, the pressure plate (23) and the adjustment ring (24) and the adjusting ramp (26), the adjustment ring extension spring (243), the adjusting ramp extension spring (263), the force sheet (28) and the hook (27) together with it move in the engine direction (x). This motion in the engine direction (x) provides the wear adjusting bolt (29) to rest on the surface of the cover slot (211). The motion of the stop ramp (25) in the engine direction (x) is prevented by the wear adjusting bolt (29) that is associated with the stop ramp (25). This situation releases the pressure applied by the stop ramp (25) on the adjusting ramp (26) due to the force sheet (28) associated with the stop ramp (25). Therefore, a space is formed between the stop ramp angled surface (251) and said adjusting ramp angled surface (261). The adjusting ramp extension spring (263) pulls the adjusting ramp (26) clockwise at a distance equal to this space. Afterwards, the adjusting ramp latch (262) moves clockwise within the adjustment ring channel (241), and the contact of the stop ramp angled surface (251) and the adjusting ramp angled surface (261) is provided.

When the clutch pedal is engaged, the force of the diaphragm spring (22) is released from the adjustment ring (24). The adjustment ring channel (241) rests on the adjusting ramp latch (262) and the adjustment ring (24) rotates on the mirror ramp angle (232). A pressure plate ramp angle (231) with a height equal to the amount of wear on the clutch disc lining (111) is obtained with this rotation. Therefore, wear compensation that is provided simultaneously and equal to the wear with the wear on the clutch disc lining (111).

An assembly hole (Z) is formed between the adjusting bolt setup surface (291) and stop ramp setup surface (252) in case the clutch cover assembly (20) is transferred so as to be assembled on the vehicle. It is provided that the clutch cover assembly (20) that compensates for wear is passive before being mounted on the vehicle with this formed assembly space (Z). In an alternative embodiment of the invention, the wear adjusting bolt (29) can be transported separately and it will be provided to be mounted on the clutch cover assembly (20) subsequently. After the clutch cover assembly (20) is mounted on the vehicle, the clutch cover assembly (20) is activated in a manner such that compensation of wear can be made. Activation of the clutch cover assembly (20) is provided by tightening the wear adjusting bolt (29) in a manner such that it will eliminate the assembly space (Z) and overlap the adjusting bolt setup surface (291) with the stop ramp setup surface (252).

In case maintenance is to be made in the clutch cover assembly (20), it is required to make the active clutch cover assembly (20) passive again. This situation is obtained by loosening or completely removing the wear adjusting bolt (29) in a manner such that an assembly space (Z) is formed. Maintenance and/or repair is provided by disassembling the clutch cover assembly (20) after the clutch cover assembly (20) is deactivated for the compensation of wear. The wear adjusting bolt (29) is tightened and the system is activated by repeating the same processes so as to reinstall the clutch cover assembly (20).

There are no structures in the inventive clutch cover assembly (20) system as gear, step space, etc. Accordingly, without any limitation all wear values can be eliminated precisely and simultaneously with wear. Therefore, on one hand all force values, operating distances, positions can be achieved as required, on the other hand the driving comfort can also be provided. The components included in the clutch cover assembly (20) structure are easy to manufacture and their cost is very low. Accordingly, the assembly processes can be performed practically, quickly and in a standard manner.

## Claims

1. A clutch cover assembly (20) which is provided on the clutch disc (11) and has a cover (21), a pressure plate (23) that is provided on said cover (21), a diaphragm spring (22) that is connected to the cover (21), an adjustment ring (24) that is fitted on said pressure plate (23), **comprising** the following so as to compensate the wear occurs on said clutch disc lining (111);
- a stop ramp (25) that is positioned on the pressure plate (23) so as to remain fixed when wear occurs on the clutch disc lining (111),
- a adjusting ramp (26) that activates said adjustment ring (24) together with it so as to increase the thickness of the pressure plate (23),
- a removable wear adjusting bolt (29) whose movement is restricted with the cover (21) so as to keep said stop ramp (26) in a fixed position during wear,
- a force sheet (28) that is connected to the pressure plate (23) with a bolt at both ends and engaged to the stop ramp (25) from its central section,
- and **characterised in that** the adjusting ramp (26) is configured with an adjusting ramp angled surface (261) and also has an adjusting ramp latch (262),
- the adjusting latch (262) is located in the adjustment ring channel (241) and engages the adjusting ramp (26) with the adjustment ring (24).

2. The clutch cover assembly (20) according to claim 1, **characterized by comprising** a cocking ramp extension spring (263) that activates said adjusting ramp (26) clockwise.

3. The clutch cover assembly (20) according to claim 1, **characterized by comprising** an adjustment ring extension spring (243) that moves said adjustment ring (24).

4. The clutch cover assembly (20) according to any of the previous claims, **characterized by comprising** a hook (27) that is connected with adjusting ramp extension spring (263) and adjustment ring extension spring (243) and engaged with the adjustment ring (24) at one end.

5. The clutch cover assembly (20) according to claim 1, **characterized by comprising** a cover slot (211) that limits the movement of the wear adjusting bolt (29) in case of wear by means of abutting the same, is configured on the cover (21).

6. The clutch cover assembly (20) according to claim 1, **characterized by comprising** a adjusting ramp bearing channel (232) that is configured on said pressure plate (23) and on which adjusting ramp (26) is fitted.

7. The clutch cover assembly (20) according to claim 1, **characterized by comprising** an adjustment ring channel (241) that is configured on said adjustment ring (24).

8. The clutch cover assembly (20) according to claim 1, **characterized by comprising** a stop ramp angled surface (251) that is defined on said stop ramp (25).

9. The clutch cover assembly (20) according to claims 1 and 8, **characterized by comprising** an adjusting bolt setup surface (261) that is defined on said wear adjusting bolt (26) corresponding to said stop ramp setup surface (251).

10. The clutch cover assembly (20) according to claims 1 and 8, **characterized by comprising** an adjusting bolt setup surface (291) that is defined on said wear adjusting bolt (29) corresponding to said stop ramp setup surface (252).

11. The clutch cover assembly (20) according to claim 10, **characterized by comprising** an assembly hole (Z) that is between the stop ramp setup surface (252) and said adjusting bolt setup surface (291) in case clutch cover assembly (20) is passive so as to compensate for wear during shipping or maintenance processes.

## Patentansprüche

1. Kupplungsabdeckungsanordnung (20), die auf der Kupplungsscheibe (11) vorgesehen ist und eine Abdeckung (21), eine Druckplatte (23), die auf der Abdeckung (21) vorgesehen ist, eine Membranfeder (22), die mit der Abdeckung (21) verbunden ist, und einen Einstellring (24) aufweist, der auf der Druckplatte (23) angebracht ist, umfassend Folgendes, um den an dem Kupplungsscheibenbelag (111) auftretenden Verschleiß auszugleichen;
- eine Anschlagrampe (25), die auf der Druckplatte (23) positioniert ist, um fixiert zu bleiben, wenn Verschleiß am Kupplungsscheibenbelag (111) auftritt,
- eine Einstellrampe (26), die den Einstellring (24) zusammen mit dieser betätigt, um die Dicke der Druckplatte (23) zu vergrößern,
- einen abnehmbaren Verschleißeinstellbolzen (29), dessen Bewegung mit der Abdeckung (21) eingeschränkt ist, um die Anschlagrampe (26) in einer fixierten Position während des Verschleißes zu halten,
- ein Kraftblech (28), das an beiden Enden über Bolzen mit der Druckplatte (23) verbunden ist und von seinem Mittelabschnitt aus an der Anschlagrampe (25) angreift,
- und **dadurch gekennzeichnet, dass** die Einstellrampe (26) mit einer Einstellrampen-Winkelfläche (261) ausgebildet ist und außerdem eine Einstellrampen-Verriegelung (262) aufweist,
- sich die Einstellverriegelung (262) im Einstellringkanal (241) befindet und mit der Einstellrampe (26) am Einstellring (24) einrastet.

2. Kupplungsabdeckungsanordnung (20) nach Anspruch 1, **dadurch gekennzeichnet, dass** sie eine Spannrampen-Zugfeder (263) umfasst, die die Einstellrampe (26) im Uhrzeigersinn betätigt.

3. Kupplungsabdeckungsanordnung (20) nach Anspruch 1, **dadurch gekennzeichnet, dass** sie eine Einstellring-Zugfeder (243) umfasst, die den Einstellring (24) bewegt.

4. Kupplungsabdeckungsanordnung (20) nach einem der vorhergehenden Ansprüche, **dadurch gekennzeichnet, dass** sie einen Haken (27) umfasst, der mit der Einstellrampen-Zugfeder (263) und der Einstellring-Zugfeder (243) verbunden ist und an einem Ende mit dem Einstellring (24) in Eingriff steht.

5. Kupplungsabdeckungsanordnung (20) nach Anspruch 1, **dadurch gekennzeichnet, dass** sie einen Abdeckungsschlitz (211) umfasst, der an der Abdeckung (21) ausgebildet ist und im Verschleißfall die Bewegung der Verschleißeinstellschraube (29) durch Anschlagen derselben begrenzt.

6. Kupplungsabdeckungsanordnung (20) nach Anspruch 1, **dadurch gekennzeichnet, dass** sie einen Einstellrampen-Lagerkanal (232) umfasst, der an der Druckplatte (23) ausgebildet ist und an dem die Einstellrampe (26) angebracht ist.

7. Kupplungsabdeckungsanordnung (20) nach Anspruch 1, **dadurch gekennzeichnet, dass** sie einen Einstellringkanal (241) umfasst, der an dem Einstellring (24) ausgebildet ist.

8. Kupplungsabdeckungsanordnung (20) nach Anspruch 1, **dadurch gekennzeichnet, dass** sie eine abgewinkelte Anschlagrampenfläche (251) umfasst, die auf der Anschlagrampe (25) definiert ist.

9. Kupplungsabdeckungsanordnung (20) nach Anspruch 1 und 8, **dadurch gekennzeichnet, dass** sie eine Einstellbolzen-Einrichtungsfläche (261) umfasst, die auf dem Verschleißeinstellbolzen (26) entsprechend der Anschlagrampen-Einrichtungsfläche (251) definiert ist.

10. Kupplungsabdeckungsanordnung (20) nach Anspruch 1 und 8, **dadurch gekennzeichnet, dass** sie eine Einstellbolzen-Einrichtungsfläche (291) umfasst, die auf dem Verschleißeinstellbolzen (29) entsprechend der Anschlagrampen-Einrichtungsfläche (252) definiert ist.

11. Kupplungsabdeckungsanordnung (20) nach Anspruch 10, **dadurch gekennzeichnet, dass** sie ein Montageloch (Z) umfasst, das sich zwischen der Anschlagrampen-Einrichtungsfläche (252) und der Einstellbolzen-Einrichtungsfläche (291) befindet, falls die Kupplungsabdeckungsanordnung (20) passiv ist, um Verschleiß während des Transports oder Wartungsvorgängen auszugleichen.

## Revendications

1. Ensemble couvercle d'embrayage (20) qui est disposé sur le disque d'embrayage (11) et comporte un couvercle (21), un plateau de pression (23) qui est disposé sur ledit couvercle (21), un ressort diaphragme (22) qui est relié au couvercle (21), une bague de réglage (24) qui est montée sur ledit plateau de pression (23), **comprenant** ce qui suit afin de compenser l'usure se produisant sur ladite garniture (111) de disque d'embrayage ;
- une rampe d'arrêt (25) qui est positionnée sur le plateau de pression (23) de façon à rester fixe lorsque l'usure se produit sur la garniture (111) de disque d'embrayage,
- une rampe de réglage (26) qui active ladite bague de réglage (24) conjointement avec celle-ci de façon à augmenter l'épaisseur du plateau de pression (23),
- un boulon de réglage d'usure amovible (29) dont le déplacement est limité avec le couvercle (21) de façon à maintenir ladite rampe d'arrêt (26) dans une position fixe durant l'usure,
- un élément plat de force (28) qui est relié au plateau de pression (23) avec un boulon au niveau des deux extrémités et en prise sur la rampe d'arrêt (25) à partir de sa section centrale,
- et **caractérisé en ce que** la rampe de réglage (26) est conçue avec une surface inclinée (261) de rampe de réglage et comporte également un verrou (262) de rampe de réglage,
- le verrou de réglage (262) est situé dans le canal (241) de bague de réglage et mettant en prise la rampe de réglage (26) avec la bague de réglage (24).

2. Ensemble couvercle d'embrayage (20) selon la revendication 1, **caractérisé en comprenant** un ressort d'extension (263) de rampe d'armement qui active ladite rampe de réglage (26) dans le sens horaire.

3. Ensemble couvercle d'embrayage (20) selon la revendication 1, **caractérisé en comprenant** un ressort d'extension (243) de bague de réglage qui déplace ladite bague de réglage (24).

4. Ensemble couvercle d'embrayage (20) selon l'une quelconque des revendications précédentes, **caractérisé en comprenant** un crochet (27) qui est relié à un ressort d'extension (263) de rampe de réglage et à un ressort d'extension (243) de bague de réglage et en prise avec la bague de réglage (24) au niveau d'une extrémité.

5. Ensemble couvercle d'embrayage (20) selon la revendication 1, **caractérisé en comprenant** une fente de couvercle (211) qui limite le mouvement du boulon de réglage d'usure (29) en cas d'usure au moyen de sa mise en butée, est conçue sur le couvercle (21).

6. Ensemble couvercle d'embrayage (20) selon la revendication 1, **caractérisé en comprenant** un canal de palier (232) de rampe de réglage qui est conçu sur ladite plateau de pression (23) et sur lequel est réglée la rampe de réglage (26).

7. Ensemble couvercle d'embrayage (20) selon la revendication 1, **caractérisé en comprenant** un canal (241) de bague de réglage qui est conçu sur ladite bague de réglage (24).

8. Ensemble couvercle d'embrayage (20) selon la revendication 1, **caractérisé en comprenant** une surface inclinée (251) de rampe d'arrêt qui est définie sur ladite rampe d'arrêt (25).

9. Ensemble couvercle d'embrayage (20) selon les revendications 1 et 8, **caractérisé en comprenant** une surface de mise en place (261) de boulon de réglage qui est définie sur ledit boulon de réglage d'usure (26) correspondant à ladite surface de mise en place (251) de rampe d'arrêt.

10. Ensemble couvercle d'embrayage (20) selon les revendications 1 et 8, **caractérisé en comprenant** une surface de mise en place (291) de boulon de réglage qui est définie sur ledit boulon de réglage d'usure (29) correspondant à ladite surface de mise en place (252) de rampe d'arrêt.

11. Ensemble couvercle d'embrayage (20) selon la revendication 10, **caractérisé en comprenant** un trou d'assemblage (Z) qui se trouve entre la surface de mise en place (252) de rampe d'arrêt et ladite surface de mise en place (291) de boulon de réglage dans le cas où l'ensemble couvercle d'embrayage (20) est passif de façon à compenser l'usure durant les processus d'expédition ou de maintenance.
